# EUROPEAN PATENT APPLICATION

(11) **EP 3 156 238 A1**
(43) Date of publication of application: **19.04.2017**
(21) Application number: 16192901.3
(22) Date of filing: 07.10.2016
(51) Int. Cl.: B41J 2/175

(54) **A LOCKING MECHANISM FOR A VALVE USED IN A CLOSING MEMBER FOR FLUID CONTAINERS**

(30) Priority: 13.10.2015 EP 15189602
(71) Applicant: OCE-Technologies B.V., 5914 CA Venlo (NL)
(72) Inventor: SMEETS, Bas, 5914 CA Venlo (NL); BOONEN, Peter H.G.G., 5914 CA Venlo (NL); RIETBERGEN, Mark, 5914 CA Venlo (NL)
(74) Representative: OCE IP Department

(57) **Abstract**

The present invention relates to a fluid container, such as an ink bottle, wherein said fluid container comprises a (spring-loaded) valve having an internal screw thread enabling the valve to be securely locked by attaching a capping device having an external screw thread onto the valve.

## Description

### FIELD OF THE INVENTION

The present invention relates to a locking mechanism to securely lock a spring-loaded valve used in a closing member for a fluid container to prevent said valve from accidentally opening during transportation.

### BACKGROUND ART

A copier, a printer or any other machine in which an image is created using a fluid such as an ink comprises an ink reservoir which accommodates a supply of ink which is gradually consumed in the course of the creation of images. From time to time, the ink reservoir needs to be refilled with ink from a fluid container, e.g. a bottle, a cartridge or the like.

To reduce costs, the ink may be refilled by means of gravitational forces. To avoid spillage during manually pouring of the ink into the reservoir, the fluid container may contain a valve, such as a spring-loaded valve, which closes the fluid container until it is subjected to a force opening the valve and thereby allowing the ink to pour into the reservoir without any spillage of the ink. In patent application WO 2011/124134 such a valve is disclosed.

A disadvantage of using a valve, such as a spring-loaded valve, in a fluid container is that the valve may be subjected to forces during transportation of said fluid container and thereby opening the valve. For instance, the valve may also be subjected to a force when one accidentally drops a fluid container such as an ink bottle, opening the valve, and thereby accidentally spilling ink.

It is therefore an object of the invention to overcome above stated disadvantage by providing a locking mechanism to securely lock a valve, preferably a spring-loaded valve, used in a bottle for holding a fluid.

### SUMMARY OF THE INVENTION

The object of the invention is achieved in a closing member for a fluid container, the closing member having an outer wall defining an inner space, the closing member further comprising a valve arranged in the inner space, the valve comprising a closing part, wherein in a closed position the closing part and a thickened part of the outer wall form a fluid tight connection, the valve comprising a first locking means being able to be reversibly engaged with a second locking means.

The closing member may comprise an inner space defined by an outer wall of the closing member. The inner space may be, partially or fully, filled with a fluid. In operation, the closing member may be connected to a bottle for holding a fluid. The inner space may be in fluid connection with a fluid reservoir in the bottle for holding a fluid. A valve may be arranged in the inner space of the closing member. The valve may comprise a closing part. The closing part may be in a closed position or in an open position. The valve may comprise a first end position, which in operation may be positioned close to the fluid container resulting in an open position of the valve. The valve may further comprise a second end position, which in operation may be positioned distant from the fluid container resulting in a closed position of the valve. In the opened position, fluid may flow through the valve in a direction of fluid outflow, wherein the direction of fluid outflow is directed from the first end position of the valve to the second end position of the valve. In the closed position, no fluid may flow through the valve in a direction of fluid outflow. The valve may comprise a first locking means. Preferably, the first locking means is positioned at the second end of the valve. More preferably, the first locking means is positioned on, or at, the outer surface of the valve. The first locking means may be configured to be reversibly engaged with a second locking means. By reversibly engaging the first and second locking means, the closing member may be switched from an open position to a closed position. The closing part of the valve and a thickened part of the outer wall of the closing member may, in a closed position, form a fluid tight connection, which may prevent fluid from leaking out of the closing member.

In an embodiment, the first locking means is an internal screw thread. A screw thread enables a screw connection with a second locking means having an external screw thread which easily reversibly engages both means to firmly connect with each other. Preferably, the internal screw thread is position on, or at, the outer surface of the valve. More preferably, the internal screen thread is faced towards the outer side of the closing member.

In an embodiment, the valve is a spring-loaded valve. The spring member, which may be any kind of spring, generates a force upon the valve to force the valve to position itself in a closed position. Only by subjecting a force onto the valve larger and opposite to the force generated by the spring member, the valve may be opened.

In an aspect of the invention, a cap suitable for being used in combination with the closing member comprises a second locking means on at least one side of the cap to reversibly engage with the first locking means of the valve of the closing member. In a closed position of the valve, the valve is locked into a closed position by the cap being attached to the valve of the closing member wherein the engagement between the first and second locking means secure a fluid tight connection.

In an embodiment, the second locking means is an external screw thread. Said external screw thread is complementary to the internal screw thread of the valve of the closing member. By screwing the external screw thread of the cap into the internal screw thread of the valve, thereby generating a screw connection, both the cap and the valve are firmly connected with each other. This screw connection can be reversed by unscrewing the external screw thread of the cap from the internal screw thread of the valve.

In an embodiment, an assembly of a closing member and a cap is provided. This assembly can be applied onto a fluid container, thereby providing a closure of said container.

In an embodiment, the fluid container is a bottle for holding a fluid comprising a closing member.

In an embodiment, the fluid container is a bottle for holding a fluid comprising an assembly of a closing member and a cap.

### BRIEF DESCRIPTION OF THE DRAWINGS

The present invention will become more fully understood from the detailed description given herein below and accompanying schematic drawings which are given by way of illustration only and are not limitative of the invention, and wherein:
- Fig. 1: illustrates a side view of a fluid container according to the present invention.
- Fig. 2: illustrates a cross-section of the closing member for a fluid container according to the present invention.
- Fig. 3: illustrates a side view of a valve according to the present invention
- Fig. 4: illustrates a bottom view of a valve according to the present invention
- Fig. 5: illustrates a cross-section of the refilling station according to the present invention in a first position
- Fig. 6: illustrates a cross-section of the refilling station according to the present invention in a second position

### DETAILED DESCRIPTION

The present invention will now be described with reference to the accompanying drawings, wherein the same reference numerals have been used to identify the same or similar elements throughout the several views

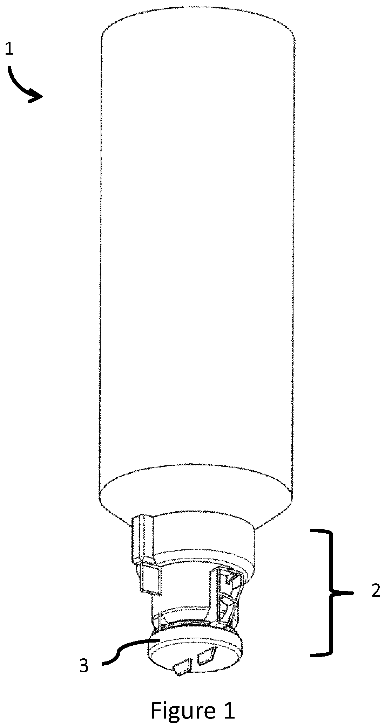

Figure 1 schematically shows a side view of a fluid container 1 having a closing member 2 on which a capping device 3 is attached to close the fluid container.

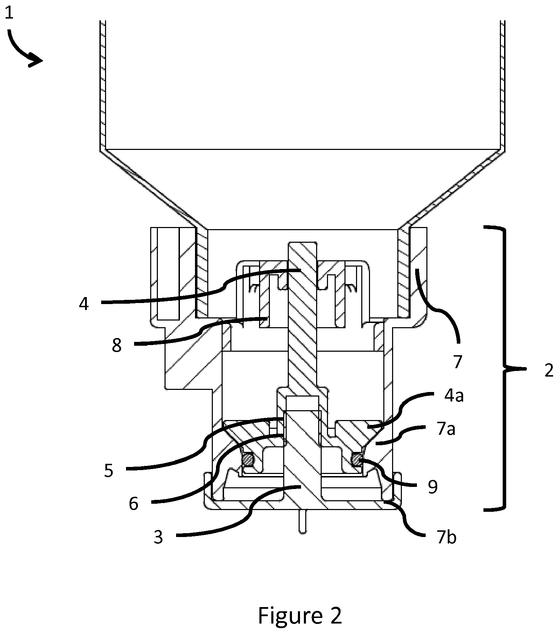

In figure 2, a cross-sectional view is given of the closing member 2 comprising an outer wall 7 defining an inner space wherein a valve 4 is being attached to a spring member 8. Further, a capping device 3 is shown, the capping device 3 being reversibly attached to valve 4 by means of a screw connection between the internal screw thread 5 of the valve 4, facing towards the outer side of the closing member 2, and the external screw thread 6 of the capping device 3.

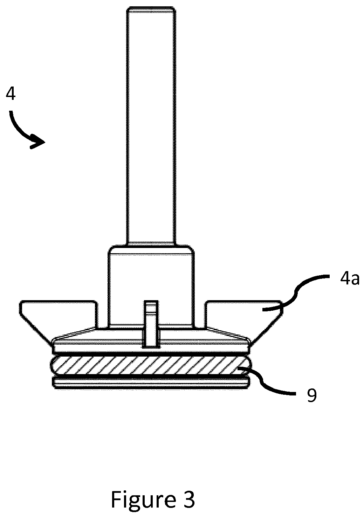

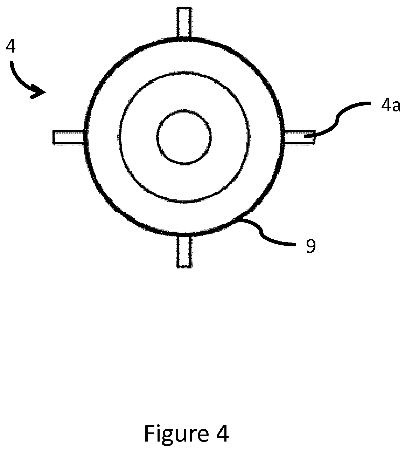

With reference to figures 3 and 4, showing a side and a bottom view of valve 4, valve 4 comprises a packing ring 9 which forms a fluid tight connection with a thickened part 7a of the outer wall 7 of closing member 2 when valve 4 is in a closed position as shown in figure 2. Furthermore, valve 4 contains one or more abutting parts 4a which abut to thickened parts 7a of the outer wall 7 of closing member 2 when valve 4 is in a closed position.

By attaching the capping device 3 to a valve 4 by means of the screw connection between the internal screw thread 5 and the external screw thread 6, abutting parts 4a of the valve 4 are pulled into the thickened parts 7a of the outer wall 7. This way valve 4 is locked into its closing position, preventing the valve from accidentally opening. At the same time, the capping device 3 is pulled into an end part 7b of the outer wall 7 of the closing member and thereby having a tight sealing of the opening of the fluid container.

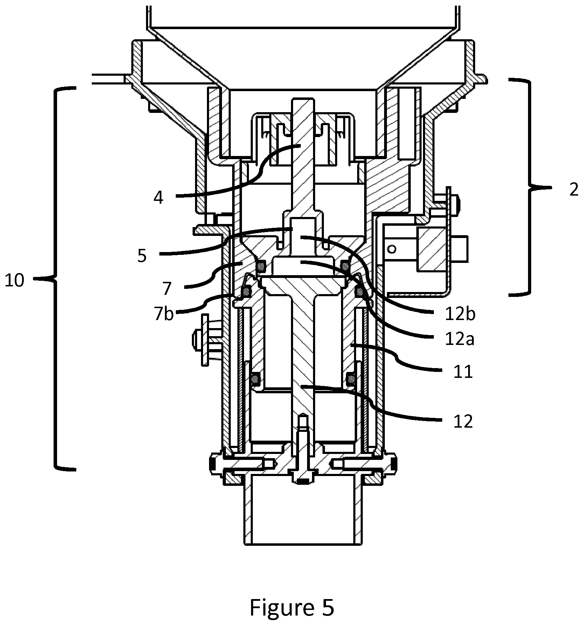

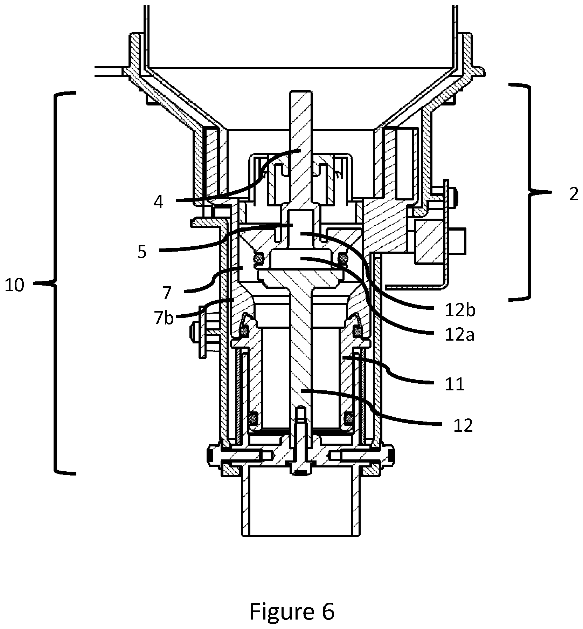

When the capping device 3 is detached from valve 4, said valve 4 is no longer locked into its closing position and valve 4 may be opened by subjecting a force onto valve 4 so it is pushed towards the inside of the fluid container 1 as illustrated in figures 5 and 6.

In figure 5, a fluid container 1 is being positioned upon a fluid refilling station 10. An end part 7b of the outer wall 7 of the closing member 2 of the fluid container 1 abuts onto a movable part 11 of the fluid refilling station 10. Meanwhile, valve 4 rests upon fixed parts 12, 12a, and 12b of the fluid refilling station 10. Valve 4 is now still in a closed position, and fluid contained in the fluid container 1 does not yet flow out of said fluid container 1.

When the fluid container 1 is being pushed in a downwards direction, as can be seen in Figure 6, movable part 11 of the fluid refilling station 10 moves downward while fixed parts 12, 12a, and 12b ensure that valve 4 is being pushed towards the inside of the fluid container 1 and thus opening valve 4 to enable fluid contained in the fluid container 1 falling into the fluid refilling station 10 by means of gravity.

Fixed parts 12a and 12b of the fluid refilling station 9 have a shape complementary to the internal screw thread portion of valve 4 of the fluid container 1. This way, an optimal contact between the fixed parts 12a and 12b and valve 4 is assured to reduce the amount of force needed to push the valve 4 towards the inside of the fluid container 1 when opening the valve 4 in the refilling station 10, and thus also reduces the amount of force needed to push the fluid container 1 in a downwards direction.

As soon as the fluid container 1 is empty, the fluid container 1 can be removed from the fluid refilling station 10 by pulling the fluid container 1 in an upwards direction. The capping device 3 can be attached again by means of a screw connection onto valve 4 as shown in Figure 2, thereby preventing any (further) contact with possible fluid residue on the outer side of valve 4 of the fluid container 1.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A closing member (2) for a fluid container (1), the closing member (2) having an outer wall (7) defining an inner space, the closing member further comprising a valve (4) arranged in the inner space, the valve (4) comprising a closing part, wherein in a closed position the closing part (9) together with a thickened part (7a) of the outer wall form a fluid tight connection, the valve (4) comprising a first locking means (5), wherein first locking means (5) is an internal screw thread being able to be reversibly engaged with a second locking means (6).

2. A closing member according to claims 1, wherein said valve is a spring-loaded valve.

3. A cap (3) suitable for being attached to the closing member (2) according to any of the preceding claims, the cap (3) comprising the second locking means (6), wherein said second locking means in an external screw thread being able to be reversibly engaged with the first locking means (5) such that in a closed position valve (4) of closing member (2) is locked and the fluid tight connection of the closing member (2) is secured.

4. Assembly of a closing member according to any of the claims 1 or 2 and a cap according to claim 3.

5. A bottle for holding a fluid comprising a closing member according to claim 1.

6. A bottle for holding a fluid according to claim 5, further comprising a cap according to claim 3.
